# EUROPÄISCHE PATENTSCHRIFT

(11) **EP 0 974 142 B1**
(45) Veröffentlichungstag und Bekanntmachung des Hinweises auf die Patenterteilung: **14.08.2002**
(21) Anmeldenummer: 97949967.0
(22) Anmeldetag: 28.11.1997
(51) Int. Cl.: G11B 7/00

(54) **VERFAHREN ZUM LESEN VON PLATTENFÖRMIGEN, OPTISCHEN SPEICHERN**
READING METHOD FOR DISC-SHAPED OPTICAL STORAGES
PROCEDE DE LECTURE DE MEMOIRES OPTIQUES EN FORME DE DISQUES

(30) Priorität: 02.04.1997 DE 19713577
(43) Veröffentlichungstag der Anmeldung: 26.01.2000
(73) Patentinhaber: ROBERT BOSCH GMBH, 70442 Stuttgart (DE)
(72) Erfinder: BECKER, Volker, D-31139 Hildesheim (DE); MINDL, Anton, D-58515 Lüdenscheid (DE); WOEHL, Wilhelm, D-31135 Hildesheim (DE); ZIMMERMANN, Holger, D-31141 Hildesheim (DE); ELKE, Dietmar, D-31139 Hildesheim (DE); NOETZEL, Guenter, D-31199 Diekholzen (DE)
(86) Internationale Anmeldenummer: DE9702778
(87) Internationale Veröffentlichungsnummer: WO9844492

(56) Entgegenhaltungen:
- US-A- 5 400 319
- PATENT ABSTRACTS OF JAPAN vol. 097, no. 002, 28.Februar 1997 & JP 08 273277 A (MATSUSHITA ELECTRIC IND CO LTD), 18.Oktober 1996,
- PATENT ABSTRACTS OF JAPAN vol. 096, no. 005, 31.Mai 1996 & JP 08 022640 A (MATSUSHITA ELECTRIC IND CO LTD), 23.Januar 1996,
- PATENT ABSTRACTS OF JAPAN vol. 017, no. 563 (P-1628), 12.Oktober 1993 & JP 05 159385 A (SONY CORP), 25.Juni 1993,
- PATENT ABSTRACTS OF JAPAN vol. 012, no. 429 (P-785), 14.November 1988 & JP 63 160043 A (MITSUBISHI ELECTRIC CORP), 2.Juli 1988,
- PATENT ABSTRACTS OF JAPAN vol. 096, no. 012, 26.Dezember 1996 & JP 08 212015 A (MATSUSHITA ELECTRIC IND CO LTD), 20.August 1996,
- PATENT ABSTRACTS OF JAPAN vol. 013, no. 129 (P-849), 30.März 1989 & JP 63 298828 A (NIPPON TELEGR & TELEPH CORP), 6.Dezember 1988,
- SCHOUHAMER IMMINK K.A.: 'The Digital Versatile Disc (DVD): System Requirements and Channel Coding' SMPTE JOURNAL Bd. 105, Nr. 8, 01 August 1996, Seiten 483 - 489, XP000627183

## Beschreibung

### Stand der Technik

Die Erfindung geht aus von einem Verfahren zum Lesen von plattenförmigen. optischen Speichern nach der Gattung des unabhängigen Anspruchs.

Aus der Zeitschrift Elektronik 21/1996, S. 114 ff sind plattenförmige, optische Speicher bekannt. Die DVD-Speicher (Digital Versatile Disc) sind eine Weiterentwicklung der herkömmlichen CD-ROM und können bis 17 GByte je Speichermedium abspeichern. Dabei sind Speicher bekannt, bei denen zwei Speicherlagen, die als datentragenden Reflektionsschichten ca. 50 nm voneinander entfernt in der Mitte der plattenförmigen Scheibe eingebracht wurden. Es ist ebenfalls bekannt, daß die DVD-Medien auch beidseitig beschrieben und gelesen werden können, was ihre Kapazität verdoppelt. Bekannt ist es, daß die DVD-Medien so ausgelegt sind, daß sie einerseits als ROM mit hoher Speicherdichte gepreßt werden oder auch als WORM mit mittlerer Speicherdichte einmal beschrieben werden können. Es ist auch möglich, beliebig oft beschreibbare DVD-Medien herzustellen, die als RAM arbeiten.

Die Art der Speicherung sowie die Speicherdichte ist abhängig von der Art der Daten.
Das Auslesen von Infomationen unterschiedlicher Art, z.B. einer Karte für das Navigationsgerät und eines Musiktitels, im weiteren Text Anwendungen genannt, ist im Stand der Technik nur über den Betrieb von mehreren Laufwerken möglich.

Das SMPTE Journal, Aug. 1996, S. 483-489 offenbart ein Verfahren gemäß den Merkmalen des Oberbegriffs des Anspruchs 1.

### Vorteile der Erfindung

Besonders vorteilhaft ist es, wenn die unterschiedlichen Anwendungen auf unterschiedlichen Spuren des optischen Speichers, d. h. übereinanderliegende, datentragende Reflektionsschichten geschrieben werden. Das hat den Vorteil, daß bei einem Hin- und Herschalten zwischen Anwendungen der optische Lesekopf lediglich elektronisch auf eine andere Brennweite umschalten und er nur wenig bewegt werden muß.

Es ist weiterhin von Vorteil, wenn der plattenförmige Speicher mit mehreren Anwendungen beidseitig beschrieben wird. Dadurch ist es auf einfach Weise möglich, über den Einsatz von zwei Leseköpfen zwei Anwendungen parallel auslesen zu können.

Weiterhin ist es von Vorteil, daß der Speicherbereich des DVD-Speicher in unterschiedliche Bereiche eingeteilt ist. In einem ersten Bereich sind die Daten mit hoher Speicherdichte als ROM-Funktion enthalten. In einem weiteren Bereich besteht die Möglichkeit, eigene Daten in einen WORM- oder RAM-Speicher einzugeben. Damit entsteht zu einer ersten Anwendung, die auf der DVD-Platte schon vorgegeben ist, ein zweiter Bereich auf den der Benutzer selbst zugreifen kann. Das hat den Vorteil, daß der Aufwand für einen zweiten Speicher, der neben der DVD-Platte betrieben werden müßte, entfällt. Weiterhin gibt es den Vorteil, daß unterschiedliche Speicherdichten verwendet werden, so daß ein erster Bereich mit vorgegebenen Daten mit großer Speicherkapazität beschrieben wird, und der zweite Bereich mit geringerer Speicherkapazität.

Das erfindungsgemäße Verfahren zum Auslesen von plattenförmigen, optischen Speichern mit den kennzeichnenden Merkmalen des unabhängigen Anspruchs 1, ist dadurch gekennzeichnet, daß eine Anwendung von einem Lesekopf ausgelesen wird, in einem Speicher zwischengespeichert wird und erst anschließend ausgegeben wird. Das hat den Vorteil, daß eine zeitkritische Anwendung, wie z. B. eine Videowiedergabe, den Speicher mit hoher Lesegeschwindigkeit füllen kann. Wird eine andere Anwendung benötigt, fährt die Lesekopf an die entsprechende Datenstelle und springt wieder an die ursprüngliche Stelle der ersten Anwendung zurück. In der Zeit, in der die zeitkritische Anwendung nicht ausgelesen werden kann, wird die Wiedergabeeinheit mit Daten aus dem Speicher versorgt.

Weiterhin ist es von Vorteil, wenn verschiedene Anwendungen von mehreren Leseeinheiten ausgelesen werden. Mit mehreren Leseeinheiten ist das parallele Auslesen auch mit geringer Speicherkapazität möglich.

Von Vorteil ist es, wenn die zeitkritische Anwendung die Rotationsgeschwindigkeit des plattenförmigen, optischen Speichers bestimmt.

### Zeichnung

Eine Ausführung der Erfindung ist in den nachfolgenden Zeichnungen dargestellt und in der Beschreibung näher erläutert. Es zeigt Figur 1 einen DVD-Speicher, Figur 2 zeigt eine Leseeinheit für DVD-Speicher und Figur 3 eine Leseinheit mit zwei Leseköpfen.

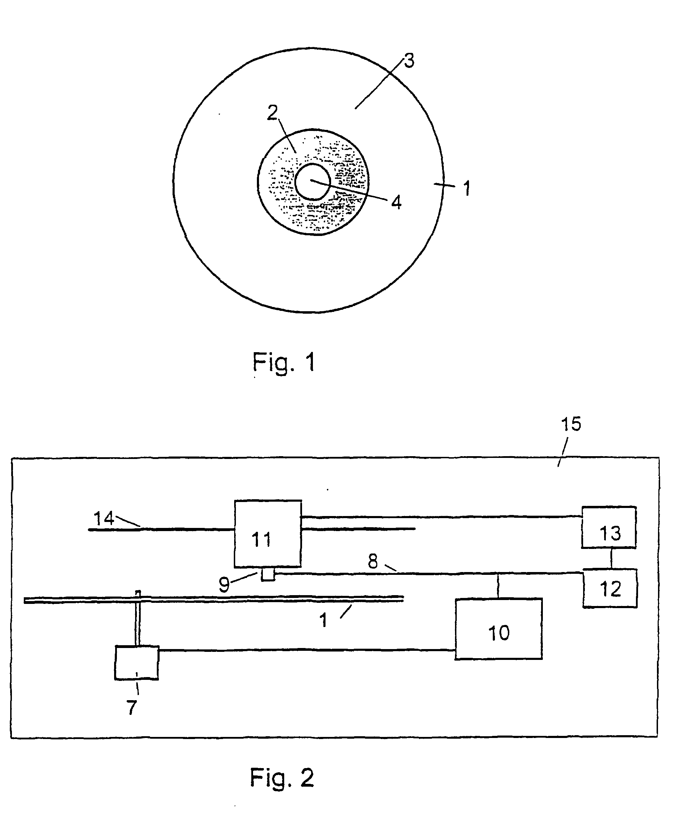

Fig. 1 zeigt den kreisförmigen Reflektionsträger der DVD 1, der in seinemm Zentrum einen kreisförmige Öffnung 4 für die Aufnahme eines Laufwerks aufweist. Die DVD ist in Fig. 1 in zwei unterschiedliche Bereiche 2 und 3 aufgeteilt, die sich in derselben Reflektionsebene befinden.
Die unterschiedlichen Bereiche der Speicherplatte 1 lassen sich mit verschiedenen Daten beschreiben. Z. B. ist es möglich, daß im Bereich 3 ein ROM mit festen Daten existiert, während im Bereich 2 ein WORM oder RAM für Nutzerdaten zur Verfügung steht. Damit kann auf der DVD z. B. mit vorgegebenen Navigationsdaten ein beschreibbarer Bereich 2 definiert sein, der für Zusatzfunktionen genutzt werden kann. Zusatzfunkxionen wären der Einsatz als Fahrtenschreiben, Unfalldatenspeicher, Autodiagnose, für Daten von Flottenmanagement und Auftragsabwicklung bei Speditionen, Karten-Update, gegebenenfalls Online über GSM übertragen sowie aktuelle oder lokale Informationen, Reiseroutenplanung für Heim-PC, spezialisierte NAvigations-CD für Behörden, Mitschreiben dokumentationspflichtiger Transporte, oder zusammen mit einem GSM-Telefon, Anrufenbeantworter, Telefonbuch usw.

Eine andere Anwendung der DVD mit geteilten Bereichen wäre ihr Einsatz als Massenspeicher in Personal Computer. Im Bereich 3 sind vorgegebene Daten wie Betriebssystem und Standardsoftware enthalten. Der RAM-Bereich 2 steht für Anwenderdaten, Updates und individuelle Software zur Verfügung.

Figur 2 zeigt eine Leseeinheit 15 für die erfindunggemäße DVD 1. Das Gerät besitzt ein Laufwerk 7, das in die Öffnung 4 der DVD 1 eingreift und sie in kreisförmige Bewegungen versetzt. Über der DVD 1 befindet sich der Lesekopf 9, dessen Datenausgang 8 in einem Prozessor 10 sowie in einer Speichereinheit 12 enden. Der Prozessor 10 ist über die Speichereinheit 12 mit einer Steuerung 13 für die Positionierung des Lesekopfs verbunden. Die Positionierung 11 bewirkt eine Verschiebung des Lesekopfes 9 entlang der horizontalen Führung 14.

Der quasiparallele Auslesevorgang unterschiedlicher Anwendungen wird anhand eines Beispiels erläutert. Auf der DVD befindet sich z. B. eine zeitkritische Hauptanwendung, wie sie ein Videofilm darstellt. Der Lesekopf 9 liest die Daten der Hauptanwendung und speichert sie über seinen Ausgang 8 in den Speicher 12 ein. Falls die auf der DVD gespeicherte Nebenanwendung Daten abfragen will, wird der Lesekopf an die entsprechende Stelle, an der die Daten auf der DVD 1 gespeichert sind, gefahren, und die Daten von dort gelesen. Der Lesekopf 9 fährt nach Aufnahme der Daten der Nebenanwendung unverzüglich wieder an die ursprüngliche Stelle zurück, an der die Hauptanwendung unterbrochen wurde. Während des Auslesens der Nebenanwendung wird die Hauptanwendung mit Daten aus dem Speicher versorgt. Dadurch ist es z.B. möglich, den Videofilm ohne Unterbrechung wiederzugeben. Für eine solche Anforderung mit Haupt- und Nebenanwendung kann die Struktur der Daten auf der DVD unter Umständen angepaßt werden, um die Unterbrechung der Hauptanwendung zeitlich gering zu gestalten. Die Größe des Speichers hängt von der Höchstzeit ab, die man für das Auslesen einer Nebenanwendung definiert.

Es ist auch denkbar, daß eine Nebenanwendung, die deutlich weniger Daten benötigt als die Hauptanwendung, auf der DVD mehrfach abgespeichert wird. Dann ist es sinnvoll, die Daten der Nebenanwendung an unterschiedlichen Stellen abzulegen. Falls die Nebenanwendung Daten anfordert, wird die Position mit dem Lesekopf 9 angefahren, die der Position, an der sich der Lesekopf gerade befindet, am nächsten liegt. Dadurch wird die mittlere Sprungweite des Lesekopfes reduziert. Die Haupt- und Nebenanwendungen bzw. unterschiedliche Anwendungen können bei der DVD auf verschiedenen Ebenen gespeichert sein. Zum Umschalten zwischen den Anwendungen muß der Lesekopf 9 über die Positionierung 11 verfahren werden und der Abtaststrahl neu fokussiert werden. Wenn beide Anwendungen an derselben Position gespeichert sind, und sich lediglich in unterschiedlichen Ebenen auf der DVD befinden, muß der Lesekopf 9 nicht verfahren, sondern nur der Abtaststrahl durch Fokussierung angepaßt werden.

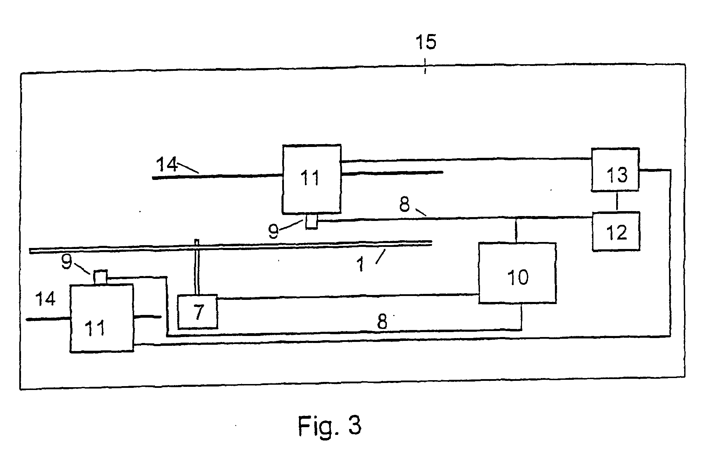

Figur 3 zeigt eine Ausführungsform der Leseeinheit 15 mit zwei Leseköpfen 9, die sich auf beiden Seiten der DVD 1 befinden. Die Leseköpfe 9 sind über ihren Datenausgang 8 mit dem Prozessor 10 verbunden. Der Prozessor besitzt eine Verbindung zur Speichereinheit 12 und zur Steuerung 13, die beide Positionierungen 11 der beiden Leseköpfe 9 ansteuert. Die Positionierungen sitzen auf horizontalen Führungen 14. Die DVD wird über das Laufwerk 7 angetrieben.
Die beiden Leseköpfe können sich in einer weiteren Ausführungsform auf derselben Seite der DVD befinden.

Mit zwei Leseköpfen 9 ist das Auslesen von zwei Anwendungen auf der DVD leicht. Dabei wird die Auslesegeschwindigkeit von der zeitkritischeren Anwendung gesteuert. Die nicht so zeitkritische Anwendung liest die Daten mit der von der Hauptanwendung vorgegebenen Geschwindigkeit.

Mit zwei Leseköpfen ist es gleichfalls möglich, bei sehr hohen Datenraten für eine Anwendung an unterschiedlichen Stellen derselben Anwendungen Daten auszulesen, und in den Speicher abzulegen. Der Prozessor 10 steuert die Speicherung der Daten im Speicher 12.

Eine technische Erweiterung liegt in der Verwendung von Schreib/Leseköpfe für die DVD. Mit der Möglichkeit, eigene Daten in bestimmte Bereiche der DVD zu schreiben, ist ein quasiparalleles Schreiben von Daten einer ersten Anwendung mit einem Lesen einer zweiten Anwendung ausführbar.

## Patentansprüche

1. Verfahren zum Auslesen von plattenförmigen, optischen Speichern, mit binären Informationen, die seriell längs mindestens einer Spur in mindestens einer glatten, optischen Bezugsfläche gespeichert sind, wobei die Informationen mittels eines fokussierten, der Spur nachgeführten Laserstrahls auslesbar sind und wobei auf den plattenförmigen Speicher (1) Informationen von mindestens zwei Anwendungen geschrieben sind, **dadurch gekennzeichnet, dass** Informationen unterschiedlicher Anwendungen entlang von unterschiedlichen Spuren, die in verschiedenen Ebenen und der selben radialen Position innerhalb des optischen Speichers (1) angeordnet sind, quasiparallel von genau einem Lesekopf (9) einer Leseeinheit durch Umschalten der Brennweite (15) ausgelesen werden.

2. Verfahren nach Anspruch 1, **dadurch gekennzeichnet, dass** mindestens eine der beiden Anwendungen in einem Speicher (12) vor einer Ausgabe zwischengespeichert wird.

3. Verfahren nach Anspruch 2 oder 3, **dadurch gekennzeichnet, daß** die Rotationsgeschwindigkeit des plattenförmigen optischen Speichers (1) durch den Datenbedarf einer der Anwendungen bestimmt wird.

4. Verfahren nach einem der vorherigen Ansprüche, **dadurch gekennzeichnet, daß** quasiparallel ein erster Bereich (3) des plattenförmigen optischen Speichers (1) ausgelesen wird, während ein zweiter Bereich (2) des plattenförmigen optischen Speichers (1) beschrieben wird.

## Claims

1. Reading method for disc-shaped optical storage devices, with binary information, which is stored serially along at least one track in at least one smooth, optical reference surface, the information being readable by means of a focused laser beam made to track the track and information of at least two applications being written on the disc-shaped storage device (1), **characterized in that** information of different applications along different tracks, which are arranged in different planes and the same radial position within the optical storage device (1), is read quasi-parallel by just one reading head (9) of a reading unit by switching over the focal length (15).

2. Method according to Claim 1, **characterized in that** at least one of the two applications is buffer-stored in a memory (12) before output.

3. Method according to Claim 1 or 2, **characterized in that** the rotational speed of the disc-shaped optical storage device (1) is determined by the data requirement of one of the applications.

4. Method according to one of the preceding claims, **characterized in that** a first area (3) of the disc-shaped optical storage device (1) is read quasi-parallel while a second area (2) of the disc-shaped optical storage device (1) is being written.

## Revendications

1. Procédé de lecture de mémoires optiques en forme de disques comportant des informations binaires enregistrées en série le long d'au moins une piste dans au moins une surface de référence optique, lisse, les informations se lisant à l'aide d'un faisceau laser focalisé, asservi à la piste, et la mémoire (1) en forme de disque comportant des informations enregistrées correspondant à au moins deux applications,
**caractérisé en ce que**
des informations d'applications différentes sont prévues le long de pistes différentes qui se trouvent dans des plans différents et dans les mêmes positions radiales dans la mémoire optique (1), pour être lues de manière quasi parallèle précisément par une tête de lecture (9) d'une unité de lecture par commutation de la distance focale (15).

2. Procédé selon la revendication 1,
**caractérisé en ce qu'**
au moins l'une des deux applications est mémonrisée de façon intermédiaire dans une mémoire (12) avant son émission.

3. Procédé selon l'une quelconque des revendications 1 ou 2,
**caractérisé en ce que**
la vitesse de rotation de la mémoire optique (1) en forme de disque est définie par la demande de données de l'une des applications.

4. Procédé selon l'une quelconque des revendications précédentes,
**caractérisé en ce que**
de manière quasi parallèle, on effectue la lecture d'une première zone (3) de la mémoire optique (1) en forme de disque pendant que l'on enregistre dans une seconde zone (2) de la mémoire optique (1) en forme de disque.
